# EUROPÄISCHE PATENTSCHRIFT

(11) **EP 1 448 470 B1**
(45) Veröffentlichungstag und Bekanntmachung des Hinweises auf die Patenterteilung: **24.01.2007**
(21) Anmeldenummer: 02774245.1
(22) Anmeldetag: 20.11.2002
(51) Int. Cl.: B66B 11/08, B66B 9/02

(54) **AUFZUG MIT RIEMENARTIGEM ÜBERTRAGUNGSMITTEL, INSBESONDERE MIT ZAHNRIEMEN, ALS TRAGMITTEL UND/ODER TREIBMITTEL**
ELEVATOR WITH BELT-TYPE MEANS OF TRANSMISSION, ESPECIALLY A TOOTHED BELT, AS A MEANS OF SUPPORT OR DRIVING MEANS
ASCENSEUR COMPRENANT UN MOYEN DE TRANSMISSION DE TYPE COURROIE, NOTAMMENT UNE COURROIE DENTEE, EN TANT QUE MOYEN DE SUPPORT OU MOYEN D'ENTRAINEMENT

(30) Priorität: 23.11.2001 EP 01811131
(43) Veröffentlichungstag der Anmeldung: 25.08.2004
(73) Patentinhaber: INVENTIO AG, 6052 Hergiswil (CH)
(72) Erfinder: ACH, Ernst, Friedrich, 6030 Ebikon (CH)
(86) Internationale Anmeldenummer: PCT/CH2002/000625
(87) Internationale Veröffentlichungsnummer: WO 2003/043927

(56) Entgegenhaltungen:
- WO-A-99/43589
- FR-A- 2 813 874
- GB-A- 2 134 209
- US-A- 5 921 351
- PATENT ABSTRACTS OF JAPAN vol. 1996, no. 12, 26. Dezember 1996 (1996-12-26) & JP 08 217366 A (HITACHI LTD), 27. August 1996 (1996-08-27)
- PATENT ABSTRACTS OF JAPAN vol. 1998, no. 03, 27. Februar 1998 (1998-02-27) & JP 09 290467 A (MITSUBOSHI BELTING LTD), 11. November 1997 (1997-11-11)

## Beschreibung

Gegenstand der Erfindung sind ein Aufzugssystem sowie riemenartige Übertragungsmittel wie in den Patentansprüchen definiert

Ein Aufzugssystem ist z.B. in US-A-5 921 351 offenbart.

Aufzugssysteme dieser Art weisen üblicherweise eine Aufzugkabine auf, die in einem Aufzugschacht oder frei entlang einer Führungseinrichtung bewegbar ist. Zum Erzeugen der Bewegung weist das Aufzugssystem einen Antrieb auf, der über Übertragungsmittel mit der Aufzugkabine und einem Ausgleichsgewicht (auch Gegengewicht genannt) zusammenwirkt.

Man unterscheidet Aufzugssysteme, bei denen Stahlseile runden Querschnitts als Übertragungsmittel eingesetzt werden und neuere Aufzugssysteme, die flache Riemen als Übertragungsmittel aufweisen.

Ein Beispiel eines Aufzugssystems mit flachem, zahnriemenartigem Übertragungsmittel ist aus der PCT-Patentanmeldung WO 99/43602 bekannt. Die Aufzugkabine gemäss dieser Patentanmeldung wird durch einen Antrieb bewegt, der am Ausgleichsgewicht angebracht ist und sich solidarisch mit diesem bewegt.
Das beschriebene System hat den Nachteil, dass die Energiezufuhr zum Antriebsmotor wie auch die Übertragung von Signalen von zugehörigen Steuer- und Regelungseinrichtungen über lange Kabel erfolgen muss, wobei diese Kabel flexibel und so angeordnet sein müssen, dass ihr eines Ende der Hubbewegung des Gegengewichts folgen kann.

Ein weiteres Aufzugssystem mit zahnriemenartigem Übertragungsmittel ist aus der PCT-Patentanmeldung WO 99/43592 bekannt. Bei der beschriebenen und beanspruchten Anordnung ist der Antrieb im Gegengewicht integriert, und ein im Aufzugschacht fixiertes zahnriemenartiges Übertragungsmittel dient zum Übertragen der Antriebskraft zwischen Gegengewicht und Aufzugsschacht. Da die Aufzugkabine und das Ausgleichgewicht an einem vom genannten zahnriemenartigen Übertragungsmittel getrennten eigentlichen Tragmittel hängen, übertragen Antrieb und übertragungsmittel nur die Differenzkraft zwischen dem Gegengewicht dem Gewicht der Aufzugkabine.

Dieses System weist dieselben Nachteile auf, wie das vorstehend beschriebene und hat den zusätzlichen Nachteil, dass für die Antriebsfunktion ein Zahnriemen und für die Tragfunktion ein anderes Mittel zum Einsatz kommen. Im Vergleich mit einem System, bei dem Antriebs- und Tragfunktion über dasselbe Mittel erfolgt, ist bei diesem System auch eine grössere Anzahl von Rollen oder Pulleys erforderlich.

Ein andersartiges Aufzugssystem mit zahnriemenartigem Übertragungsmittel ist aus dem US-Patent 5,191,920 bekannt. In dem gezeigten Aufzugsystem steht das zahnriemenartige Übertragungsmittel im Aufzugschacht still. Die Antriebseinheit befindet sich an der Aufzugkabine bzw. an dem sogenannten Lastaufnahmemittel.

Dieses System weist daher dieselben Nachteile auf, wie das in WO 99/43602 beschriebene. Ein zusätzlicher Nachteil ist hier, dass durch den Aufzugsantrieb das Gewicht des Lastaufnahmemittels und somit die erforderliche Antriebsleistung erhöht wird.

Die **Aufgabe** der Erfindung wird somit darin gesehen, ein verbessertes Aufzugssystem der eingangs genannten Art zu schaffen, welches Nachteile der bekannten Systeme reduziert oder vermeidet.

Die **Lösung** dieser Aufgabe ist in den Patentansprüchen definiert.

Das erfindungsgemässe Aufzugssystem weist eine Aufzugkabine, einen Antrieb, einen Zahnriemen als Übertragungsmittel und ein Gegengewicht auf. Der Antrieb ist stationär und der Zahnriemen wirkt mit dem Antrieb zusammen, um die Aufzugkabine durch Übertragung einer Kraft zu bewegen.

Im Folgenden wird die Erfindung anhand von Ausführungsbeispielen und mit Bezug auf die Zeichnung beschrieben. Es zeigen:
- **Fig. 1A**: ein erstes erfindungsgemässes Aufzugssystem, in stark vereinfachter und schematisierter Schnittdarstellung, mit einem Zahnriemen als Übertragungsmittel.
- **Fig. 1B**: das erste Aufzugssystem, in stark vereinfachter und schematisierter Draufsicht, mit einem Zahnriemen als übertragungsmittel.
- **Fig. 2**: ein zweites Aufzugssystem, in stark vereinfachter und schematisierter Draufsicht, mit einem Zahnriemen als Übertragungsmittel.
- **Fig. 3**: ein drittes Aufzugssystem, in stark vereinfachter und schematisierter Draufsicht, mit einem Zahnriemen als Übertragungsmittel.
- **Fig. 4**: ein viertes Aufzugssystem, in stark vereinfachter und schematisierter Draufsicht, mit zwei Zahnriemen als Übertragungsmittel.
- **Fig. 5A**: ein fünftes Aufzugssystem gemäss Erfindung, in stark vereinfachter und schematisierter Schnittdarstellung, mit einem Zahnriemen als Übertragungsmittel.
- **Fig. 5B**: das fünfte Aufzugssystem, in stark vereinfachter und schematisierter Draufsicht, mit einem Zahnriemen als Übertragungsmittel.
- **Fig. 5C**: einen Motor, in stark vereinfachter und schematisierter Darstellung, der als Antrieb für das fünfte Aufzugssystem geeignet ist.
- **Fig. 6A**: ein sechstes Aufzugssystem gemäss Erfindung, in stark vereinfachter und schematisierter Draufsicht, mit zwei Zahnriemen als Übertragungsmittel.
- **Fig. 6B**: das sechste Aufzugssystem, in stark vereinfachter und schematisierter Schnittdarstellung, mit zwei Zahnriemen als Übertragungsmittel.
- **Fig. 6C**: einen ersten Motor, in stark vereinfachter und schematisierter Darstellung, der als Antrieb für das sechste Aufzugssystem geeignet ist.
- **Fig. 6D**: einen zweiten Motor, in stark vereinfachter und schematisierter Darstellung, der als Antrieb für das sechste Aufzugssystem geeignet ist.
- **Fig. 7A**: ein siebtes Aufzugssystem gemäss Erfindung, in stark vereinfachter und schematisierter Draufsicht, mit zwei Zahnriemen als Übertragungsmittel.
- **Fig. 7B**: das siebte Aufzugssystem, in stark vereinfachter und schematisierter Schnittdarstellung, mit zwei Zahnriemen als Übertragungsmittel.
- **Fig. 8**: ein achtes Aufzugssystem gemäss Erfindung, in stark vereinfachter und schematisierter Schnittdarstellung, mit einem Zahnriemen als Treibmittel und einem getrennten Tragmittel.
- **Fig. 9**: ein neuntes Aufzugssystem gemäss Erfindung, in stark vereinfachter und schematisierter Schnittdarstellung, mit einem Zahnriemen als Treibmittel und einem getrennten Tragmittel.
- **Fig. 10**: ein zehntes Aufzugssystem gemäss Erfindung, in stark vereinfachter und schematisierter Schnittdarstellung, mit einem Zahnriemen als Treibmittel und einem getrennten Tragmittel.
- **Fig. 11A**: ein elftes Aufzugssystem gemäss Erfindung, in stark vereinfachter und schematisierter Schnittdarstellung, mit zwei Zahnriemen als Übertragungsmittel.
- **Fig. 11B**: das elfte Aufzugssystem, in stark vereinfachter und schematisierter Draufsicht, mit zwei Zahnriemen als Übertragungsmittel.
- **Fig. 12**: ein zwölftes Aufzugssystem, in stark vereinfachter und schematisierter Draufsicht.
- **Fig. 13**: einen weiteren Motor, in stark vereinfachter und schematisierter Darstellung, der als Antrieb für verschiedene Aufzugssystem gemäss Erfindung geeignet ist.
- **Fig. 14A**: ein Befestigungsmittel, in stark vereinfachter und schematisierter Schnittdarstellung, das als Befestigung für einen Zahnriemen geeignet ist.
- **Fig. 14B**: das Befestigungsmittel, in stark vereinfachter und schematisierter Draufsicht, das als Befestigung für einen Zahnriemen geeignet ist.
- **Fig. 14C**: ein Befestigungsmittel, in stark vereinfachter und schematisierter Draufsicht, das als Befestigung für zwei Zahnriemen geeignet ist.
- **Fig. 14D**: einen Teil des Befestigungsmittels in vereinfachter und schematisierter Darstellung.
- **Fig. 15A**: einen geradverzahnten Zahnriemen in vereinfachter Darstellung.
- **Fig. 15B**: einen Zahnriemen mit bogenförmigen Zähnen in vereinfachter Darstellung.
- **Fig. 15C**: einen Zahnriemen mit pfeilförmig angeordneten Zähnen in vereinfachter Darstellung.
- **Fig. 16A**: ein Zahnriemenpulley für pfeilförmig verzahnte Zahnriemen in vereinfachter Darstellung.
- **Fig. 16B**: ein Zahnriemenpulley mit Bordscheiben.
- **Fig. 17**: einen Zahnriemen mit Führungsrippe und Zugträgern.
- **Fig. 18**: ein Aufzugssystem in vereinfachter und schematisierter Schnittdarstellung, mit einem speziell angepassten Zahnriemen.
- **Fig. 19**: eine Detailansicht des Aufzugssystems gemäss Fig. 18

### Detaillierte Beschreibung

In den folgenden Ausführungsformen kommen Zahnriemen zum Einsatz. Ein Zahnriemen im Sinne der Erfindung ist ein formschlüssiges, schlupffreies Übertragungsmittel, das synchron mit einem sogenannten Antriebspulley umläuft.
Gegenüber reibschlüssigen Übertragungsmitteln weist er den Vorteil auf, dass die Grösse der Kraftübertragung zwischen einem Antriebspulley und dem Übertragungsmittel wesentlich weniger von der Höhe der in den zu- und weglaufenden Trums des Übertragungsmittels vorhandenen Zugkräfte abhängig ist. Bei der Anwendung eines Zahnriemens als Übertragungsmittel für eine Aufzugkabine mit Gegengewicht wirkt sich dieser Vorteil darin aus, dass auch eine sehr leichtgebaute Aufzugkabine mit einem viel schwereren Gegengewicht zusammenwirken kann, ohne dass das Übertragungsmittel auf dem Antriebspulley rutscht.

Die Tragfähigkeit der Zähne des Zahnriemens und die Anzahl der im Eingriff stehenden Zähne bestimmen die Übertragungsfähigkeit. Idealerweise weist der Zahnriemen gebogene oder pfeilförmig angeordnete Zähne auf. Dadurch zentriert sich der Zahnriemen auf dem Antriebspulley selbst. Ausserdem verbessert sich dadurch die Laufruhe. Normalerweise wird die Lauffläche des Antriebspulleys an die Form der Zähne des Zahnriemens angepasst, d.h. die Antriebspulleys weisen eine der Riemenverzahnung entsprechende Gegenverzahnung auf.

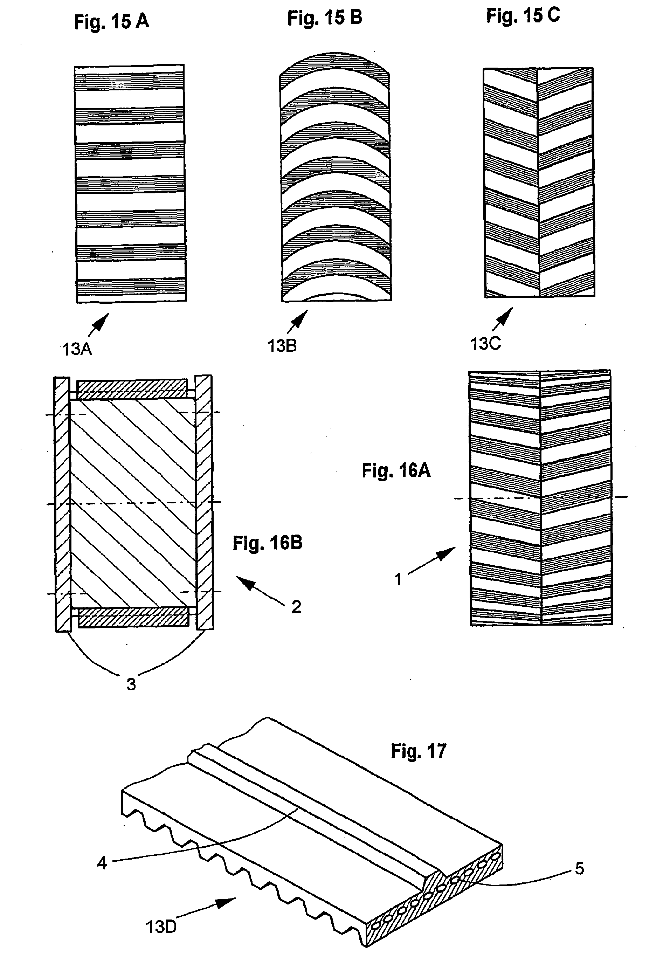

**Fig 15A** zeigt einen Zahnriemen 13A mit Geradverzahnung. Vorteilhaft ist, dass die Antriebspulleys für diese Zahnriemenausführung durch Fräsen einfach herzustellen sind. Solche Zahnriemen sind durch spezielle Massnahmen, beispielsweise durch seitlich an den Pulleys angebrachte Bordscheiben, zu führen. Der bei Geradverzahnung über die gesamte Zahnbreite gleichzeitig erfolgende Zahneingriff hat eine relativ starke Geräuschentwicklung im Betrieb zur Folge.

**Fig. 15B** zeigt einen Zahnriemen 13B mit bogenförmigen Zähnen. Diese Riemenverzahnung wirkt zusammen mit einer entsprechenden Gegenverzahnung eines Antriebs- oder Umlenkpulleys selbstzentrierend. Dadurch, dass nicht die gesamte Zahnbreite gleichzeitig zum Eingriff kommt, wird auch das Betriebsgeräusch reduziert.

In **Fig. 15C** ist ein Zahnriemen 13C mit Pfeilverzahnung dargestellt. Die Zähne auf der linken und der rechten Riemenhälfte sind gegeneinander pfeilförmig angeordnet und in Riemenlängsrichtung jeweils um eine halbe Zahnteilung versetzt. Solche Zahnriemen arbeiten geräuscharm, da der Zahneingriff zwischen Riemen und Pulley in jedem Bereich der Riemenbreite zu einem anderen Zeitpunkt erfolgt, und sie zentrieren sich auf der Gegenverzahnung eines Antriebspulleys selbst.

**Fig 16A** zeigt ein verzahntes Pulley 1 für einen Zahnriemen mit Pfeilverzahnung. Die Verzahnung ist entweder gefräst oder gewalzt. Das dargestellte Pulley ist zweiteilig ausgeführt, um das Fräsen der Verzahnung zu ermöglichen.

**Fig. 16B** zeigt ein Antriebs- oder Umlenkpulley 2 für geradverzahnte Zahnriemen, das zwecks seitlicher Führung des Zahnriemens zwei angeschraubte Bordscheiben aufweist. Auf diese Weise kann auch ein Zahnriemen mit selbstzentrierender Verzahnung geführt werden, wenn er mit der unbezahnten Seite um ein Umlenkpulley läuft.

In **Fig. 17** ist ein Zahnriemen 13D dargestellt, der auf seiner unbezahnten Rückseite eine Führungsrippe 4 aufweist. Diese dient dazu, den Zahnriemen zu führen, wenn er mit seiner unbezahnten Seite ein Pulley umläuft. Die Lauffläche eines solchen Pulleys enthält in diesem Fall eine entsprechende Führungsrille. Diese Situation ist bei Aufzugssystemen gegeben, bei denen der Zahnriemen durch Pulleys so gelenkt wird, dass er in beiden Richtungen gebogen wird. Eine Führungsrippe kann auch an einer der Seitenkanten oder an beiden Seitenkanten angebracht sein.

Das Übertragungsmittel gemäss **Fig. 17** (hier Zahnriemen 13D) enthält in seiner Längsrichtung orientierte Zugträger 5, die aus metallischen Litzen (z.B. Stahllitzen) oder nichtmetallischen Litzen (z. B. aus Chemiefasern) bestehen. Solche Zugträger 5 verleihen den erfindungsgemässen Übertragungsmitteln die erforderliche Zugfestigkeit und/oder Längssteifigkeit.
Bevorzugte Ausführungsformen von erfindungsgemässen Übertragungsmitteln enthalten Zugträger aus Zylonfasern. Zylon ist ein Handelsname der Firma Toyobo Co. Ltd., Japan, und betrifft Chemiefasern aus Poly(p-phenylene-2,6-benzobisoxazole) (PBO). Diese Fasern übertreffen in den für die erfindungsgemässe Anwendung entscheidenden Eigenschaften diejenigen von Stahllitzen und von anderen bekannten Fasern. Die Längsdehnung und das Metergewicht des Übertragungsmittels können durch die Verwendung von Zylon-Fasern reduziert werden, wobei die Bruchkraft gleichzeitig höher ausfällt.

Idealerweise sollten die Zugträger (5) so im Zahnriemen (13) eingebettet sein, dass sich benachbarte Fasern oder Litzen nicht berühren. Als ideal haben sich für den Aufzugbau Riemen mit einer Breite von etwa 30 mm und einer Dicke (ohne Verzahnung) von 3 mm erwiesen, die einen Zugträger-Füllungsgrad, d. h. ein Verhältnis zwischen dem Gesamtquerschnitt aller Zugträger und dem Querschnitt des Riemens, von mindestens 20% aufweisen.

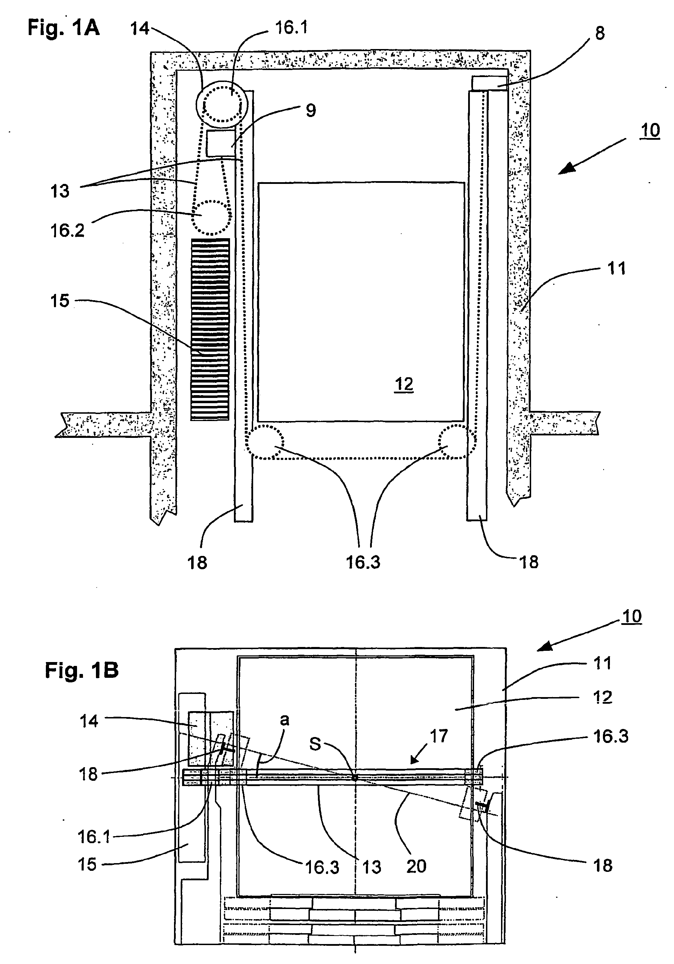

Eine erste Ausführungsform eines erfindungsgemässen Aufzugssystems 10 ist in **Fig. 1A** und **1B** dargestellt. **Fig. 1A** zeigt einen Schnitt durch das Kopfende des Aufzugschachtes 11. Die Aufzugkabine 12 wie auch ein Gegengewicht 15 werden über ein Zahnriemenübertragungsmittel 13 innerhalb des Schachtes 11 bewegt. Zu diesem Zweck ist ein über der oberen Endlage des Gegengewichtes 15 stationär angebrachter Antrieb 14 vorgesehen, der über ein Antriebspulley 16.1 auf das Zahnriemenübertragungsmittel 13 einwirkt. Der Antrieb 14 ist auf einer Konsole 9 montiert, die auf oder an einer oder mehreren Führungsschienen 18 des Aufzugssystems abgestützt ist. In einer anderen Ausführungsform kann die Konsole 9 in oder an der Schachtwand abgestützt sein. Das Zahnriemenübertragungsmittel 13 ist an seinem einen Ende im Bereich der Konsole 9 fixiert, führt von diesem Fixpunkt aus abwärts zu einem Aufhängungspulley 16.2 eines Gegengewichts 15, umschlingt dieses Aufhängungspulley 16.2, führt aufwärts zum Antriebspulley 16.1, umschlingt dieses, führt abwärts zu einem unterhalb der Aufzugkabine 12 an dieser angebrachten ersten Umlenkpulley 16.3, von dort aus horizontal unter der Aufzugkabine 12 hindurch zu einem zweiten unterhalb der Aufzugkabine 12 an dieser angebrachten Umlenkpulley 16.3 und anschliessend wieder aufwärts zu einem zweiten, als Supportstruktur 8 bezeichneten Fixpunkt. Je nach Drehrichtung des Antriebes 14 wird die Kabine 12 über das Zahnriemenübertragungsmittel 13 auf- oder abwärts bewegt.
Die durch die beiden Kabinenführungsschienen 18 gebildete Führungsebene 20 ist, wie in Fig. 1B gezeigt, gegenüber dem unter der Aufzugkabine 12 hindurchführenden Strang des Zahnriemenübertragungsmittels 13, d. h. gegenüber der Querachse der Aufzugkabine 12, um einem Winkel a von 15 bis 20 Grad verdreht angeordnet. Dadurch können die Kabinenführungsschienen ausserhalb des vom Zahnriemenübertragungsmittel 13 und den Riemenpulleys beanspruchten Raums platziert werden, wodurch erreicht wird, dass einerseits die Achse des unter der Aufzugkabine 12 hindurchführenden Strangs des Zahnriemenübertragungsmittels 13 unterhalb des Kabinenschwerpunkts S angeordnet werden kann, wenn dieser in der durch die Kabinenführungsschienen 18 gebildete Führungsebene 20 liegt. Ausserdem wird damit die beanspruchte Schachtbreite minimiert.

Mit der Anordnung des unter der Aufzugkabine 12 hindurchführenden Strangs des Zahnriemenübertragungsmittels 13 unterhalb des Kabinenschwerpunkts S werden die zwischen Aufzugkabine 12 und Kabinenführungsschienen 18 auftretenden Führungskräfte im Normalbetrieb so gering wie möglich gehalten, und dadurch, dass der Schwerpunkt S in der Führungsebene 20 liegt, werden die Führungskräfte minimiert, wenn Fangbremsen an den Kabinenführungsschienen 18 angreifen.

Bei der gezeigten Anordnung des Zahnriemenübertragungsmittels 13, des Aufhängungspulleys 16.2 und der unterhalb der Aufzugkabine 12 angebrachten Umlenkpulleys 16.3 ergibt sich ein Verhältnis von Zahnriemengeschwindigkeit zu Kabinen- und Gegengewichtsgeschwindigkeit von 2:1 (2:1-Umhängung). Dadurch wird gegenüber einer 1:1-Umhängung das vom Antrieb 14 aufzubringende Drehmoment auf die Hälfte reduziert.

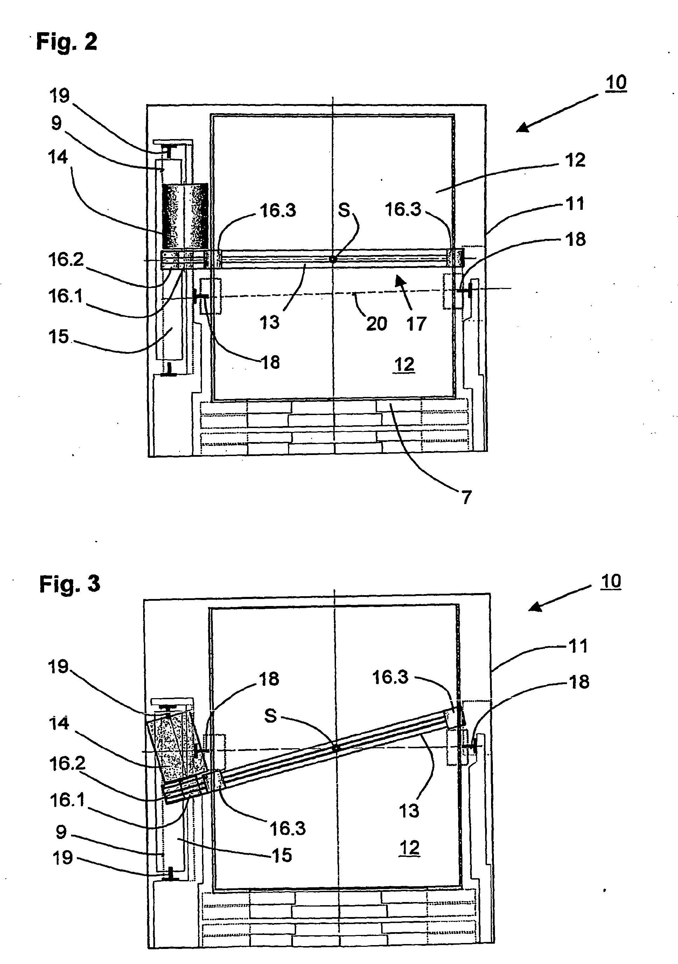

Da der bei Zahnriemen erforderliche Mindestradius an Antriebs- und Umlenkpulleys wesentlich geringer ist als bei den im Aufzugbau bisher üblichen Stahldraht-Tragseilen, ergeben sich mehrere Vorteile. Dank entsprechend reduziertem Durchmesser des Antriebspulleys 16.1, reduzieren sich das am Antrieb 14 erforderliche Drehmoment und somit die Abmessungen des Antriebs. Dadurch, und dank den ebenfalls in ihren Durchmessern reduzierten Umlenkpulleys 16.2 und 16.3, ist die in Fig. 1 und 2 dargestellte Art der Ausführung und Anordnung des Aufzugs relativ kompakt und kann wie gezeigt im Schacht 11 untergebracht werden. Die geringe Grösse der an der Kabine 12 angebrachten Umlenkpulleys 16.3 erlaubt, den üblicherweise als Unterflasche 17 bezeichneten Unterbau unterhalb der Aufzugkabine 12, in welchem diese Umlenkpulleys 16.3 eingebaut sind, mit geringen Abmessungen auszuführen. Vorzugsweise kann diese Unterflasche 17 mit den Umlenkpulleys 16.3 sogar in den Kabinenboden integriert werden.

Eine Draufsicht auf eine ähnliche Ausführungsform ist in **Fig. 2** gezeigt. Die Aufzugkabine 12 wird über ein Zahnriemenübertragungsmittel 13 innerhalb des Schachtes 11 auf- bzw. abwärts bewegt. Zu diesem Zweck ist ein stationärer Antrieb 14 vorgesehen, der das Zahnriemenübertragungsmittel 13 antreibt. Es sind mehrere Pulleys 16.1, 16.2, 16.3 vorgesehen, um das Zahnriemenübertragungsmittel 13 anzutreiben und zu führen. Im gezeigten Ausführungsbeispiel ist der Antrieb 14 stationär über der oberen Endlage des Gegengewichtes 15 angebracht. Der Antrieb 14 ist auf einer Konsole 9 montiert, die auf oder an einer oder mehreren Führungsschienen 18 des Aufzugssystems abgestützt ist. Die den unter der Aufzugkabine 12 hindurchgeführten Trum des Zahnriemenübertragungsmittels 13 führende Unterflasche 17 ist rechtwinklig zu den Seitenwänden unterhalb des Kabinenschwerpunkts S angeordnet. Dadurch treten an den Kabinenführungsschienen 18 nur geringe Führungskräfte auf. Im übrigen gleicht diese zweite Ausführungsform im wesentlichen der ersten Ausführungsform. Die Kabinenführungsschienen 18 sind exzentrisch angeordnet, d.h. die Führungsebene 20 befindet sich zwischen der Kabinentüre 7 und dem Schwerpunkt S der Aufzugkabine 12, der im gezeigten Fall auf der Mittelachse des Zahnriemenübertragungsmittels 13 liegt. In der gezeigten Ausführung sind, wie im Zusammenhang mit Fig. 1A und 1B erklärt, das Gegengewicht 15 mit dem Umlenkpulley 16.2 sowie die Aufzugkabine 12 mit den Umlenkpulleys 16.3 jeweils 2:1 aufgehängt (2:1-Umhängung).

**Fig. 3** zeigt eine Draufsicht auf eine weitere Ausführungsform eines Aufzugssystems 10. Der Antrieb 14 ist auf den Gegengewichtsführungsschienen 19 und auf einer der Kabinenführungsschienen 18 abgestützt. Auf der gegenüberliegenden Seite ist der Fixpunkt des Zahnriemenübertragungsmittels 13 auf der zweiten Kabinenführungsschiene 18 abgestützt. Auch in dieser Ausführungsform sind Aufzugkabine 12 und Gegengewicht 15 2:1 aufgehängt. Der diagonale Verlauf des Zahnriemenübertragungsmittels 13 ermöglicht eine in Bezug auf den Kabinenschwerpunkt S zentrisch geführte und zentrisch aufgehängte Aufzugkabine 12 mit den im Zusammenhang mit Fig 2 beschriebenen Vorteilen.

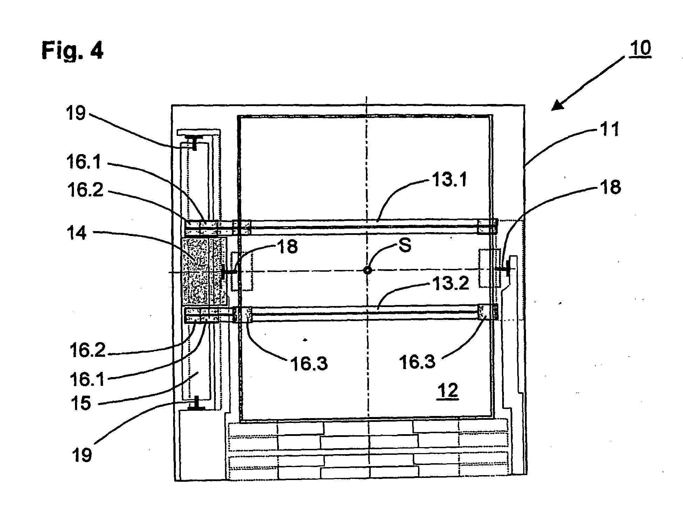

Bei einer weiteren Ausführungsform, die in **Fig. 4** gezeigt ist, ist der Antrieb 14 auf den beiden Gegengewichtsführungsschienen 19 und auf einer Kabinenführungsschiene 18 abgestützt. Auf der gegenüberliegenden Seite ist der Fixpunkt für die hier zu fixierenden Enden des Zahnriementragmittels 13 auf_der zweiten Kabinenschiene 18 abgestützt. Der Antrieb 14 steht mit zwei Antriebspulleys 16.1 in Verbindung. Es sind zwei Stränge von Zahnriemenübertragungsmitteln 13.1 und 13.2 vorgesehen, die zueinander parallel verlaufen. Auch in dieser Ausführungsform sind Aufzugkabine 12 und Gegengewicht 15 2:1 aufgehängt. Die Aufteilung des Zahnriemenübertragungsmittels in zwei parallele Stränge 13.1 und 13.2 ermöglicht eine in Bezug auf den Kabinenschwerpunkt S zentrische Führung und eine zentrische Aufhängung der Aufzugkabine 12 mit den im Zusammenhang mit Fig 2 beschriebenen Vorteilen.

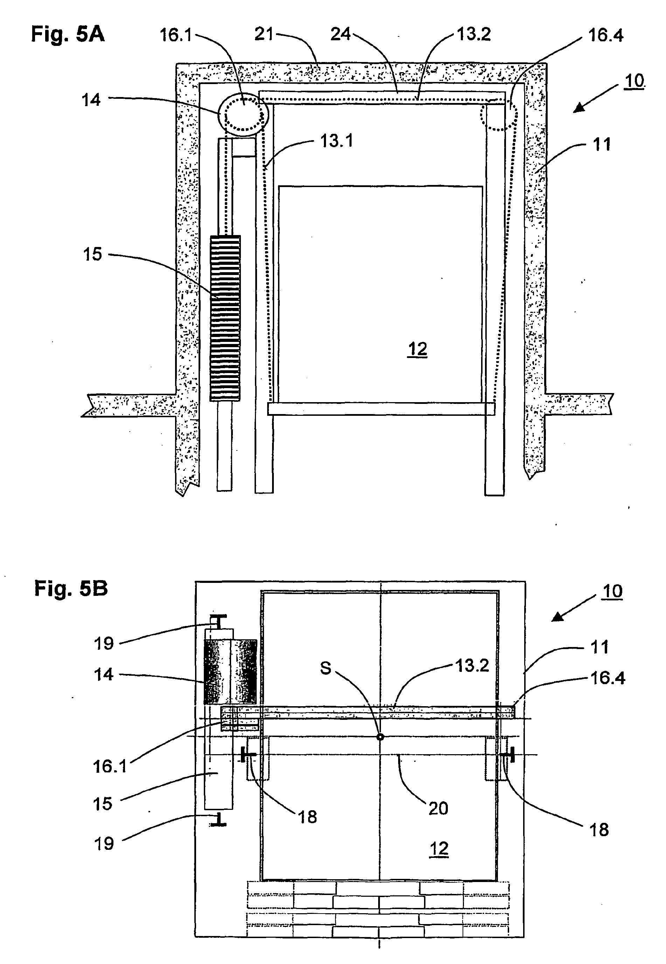

Eine andersartige Anordnung 10 ist in den **Fig. 5A** und **5B** gezeigt. Der Antrieb 14 ist ausserhalb der Kabinenprojektion über der oberen Endlage des Gegengewichtes 15 angeordnet. Der Antrieb kann, wie auch schon bei den vorhergehenden Ausführungsbeispielen, einen Synchron- oder einen Asynchronmotor enthalten. Vorzugsweise wird der Antrieb 14 auf einem Träger platziert, der auf oder an den Kabinenführungsschienen 18 der Aufzugkabine 12 und den Gegengewichtsführungsschienen 19 befestigt ist. In dieser Ausführungsform sind Aufzugkabine 12 und Gegengewicht 15 1:1 aufgehängt. Das Zahnriemenübertragungsmittel 13 ist links und rechts der Aufzugkabine 12 angeordnet. Ein erstes Trum 13.1 des Zahnriemenübertragungsmittels 13 führt vom Gegengewicht 15 über das Antriebspulley 16.1 zu einem an der Aufzugkabine 12 in der Nähe des Bodens vorhandenen Fixpunkt. Ein zweites Trum 13.2 des Zahnriemenübertragungsmittels 13 führt vom Gegengewicht 15 zum Antriebspulley 16.1 und dann entlang der Schachtdecke 21 zu einem Umlenkpulley 16.4. Durch letzteres wird das zweite Trum 13.2 umgelenkt und zu einem zweiten an der Aufzugkabine 12 in der Nähe des Bodens vorhandenen Fixpunkt geführt. Die beiden Kabinenführungsschienen 18 werden am oberen Ende vorzugsweise miteinander verbunden (z.B. über einen Querträger 24), um die horizontal gerichtete Riemenkraft aufzufangen. Das Zahnriemenübertragungsmittel 13 und die Führungsebene 20 der Aufzugkabine 12 sind symmetrisch zur Achse mit dem Kabinenschwerpunkt S angeordnet. Ihr Abstand zu dieser Achse ist klein, um die Führungskräfte, einerseits im Normalbetrieb, andererseits beim Eingreifen einer Fangvorrichtung, gering zu halten.

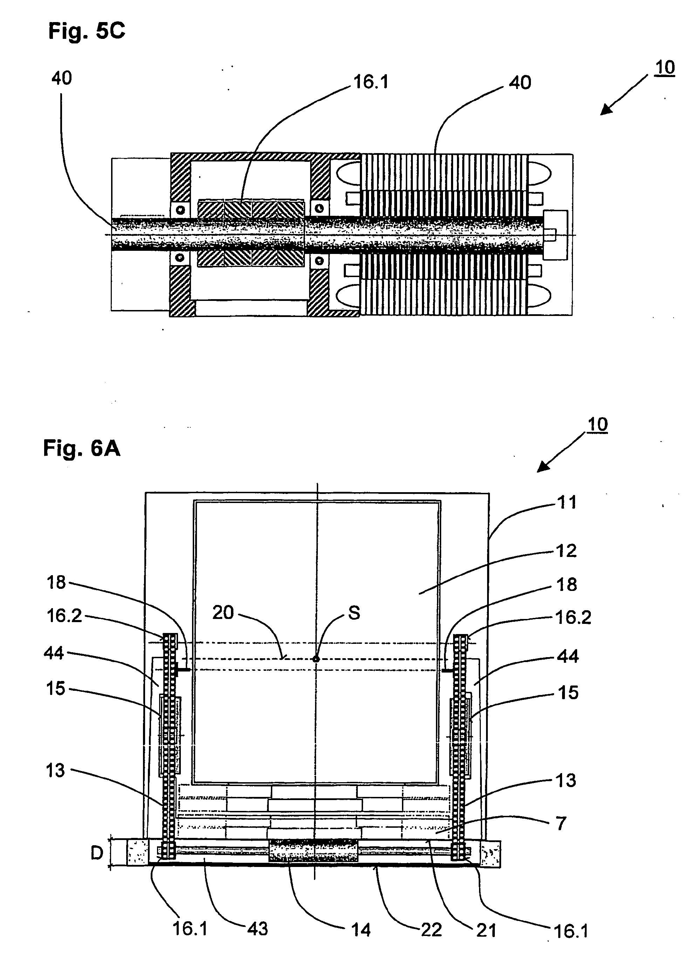

In **Fig. 5C** sind Details eines Antriebs 14 gezeigt, der Bestandteil eines maschinenraumlosen Aufzugssystem gemäss den **Fig. 5A** und **5B** ist. Der Antrieb 14 umfasst einen Motor 40. Das Antriebspulley 16.1 ist durch eine Welle 45 mit dem Motor 40 verbunden. Der gezeigte Antrieb 14 ist sehr kompakt. Die Zahnriemen 13 können das Antriebspulley 16.1 mit 180° oder mit nur 90° umschlingen, je nachdem in welche Richtung der Zahnriemen vom Antriebspulley 16.1 weggeführt werden soll.

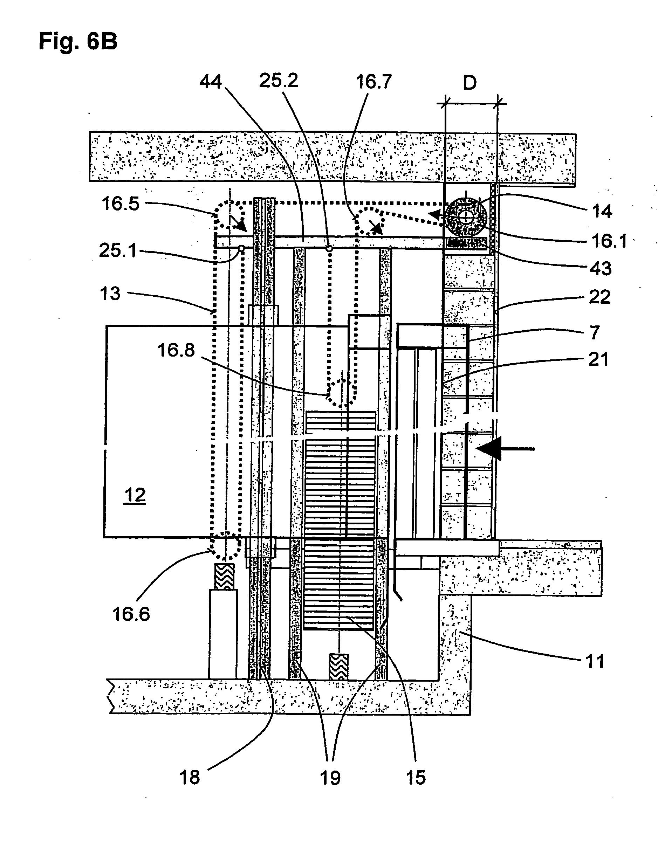

Eine weitere Ausführungsform ist in den **Fig. 6A** und **6B** gezeigt. Der Antrieb 14 ist oberhalb der Aufzug-Schachttüre 7 zwischen der Schachtinnenwand 21 und der Schachtaussenwand 22 angeordnet. Dies ist ohne weiteres möglich, da der Durchmesser des Antriebs 14 kleiner ist als die Schachtwanddicke D. Der Antrieb 14 kann wie bei den anderen Ausführungsformen als Synchron- oder Asynchronmotor ausgelegt sein. Vorteilhafterweise wird als Antrieb ein Kleinmassensystem, d. h. ein Antrieb mit geringem Massenträgheitsmoment, eingesetzt. Der Antrieb 14 ist an den beiden Enden je mit einem Antriebspulley 16.1 versehen. Sowohl die Antriebspulleys 16.1 als auch der Antrieb 14 können auf einem gemeinsamen Support 43 befestigt sein. Das System 10 ist mit zwei Gegengewichten 15 ausgestattet, die je auf einer Seite der Aufzugkabine 12 angeordnet sind. Die Zahnriemenübertragungsmittel 13 sind symmetrisch auf der linken und rechten Seite der Aufzugkabine 12 angeordnet. Erste Trums der Zahnriemen-Übertragungsmittel 13 führen von den Antriebspulleys 16.1 aus zu ersten auf gleicher Höhe fest montierten Umlenkpulleys 16.5, von diesen aus abwärts zu beidseitig an der Aufzugkabine 12 angebrachten Umlenkpulleys 16.6, umschlingen diese und führen aufwärts zu Fixpunkten 25.1. Zweite Trums der Zahnriemen-Übertragungsmittel 13 führen von den Antriebspulleys 16.1 aus zu zweiten auf gleicher Höhe fest montierten Umlenkpulleys 16.7, von diesen aus abwärts zu an den Gegengewichten 15 angebrachten Umlenkpulleys 16.8, umschlingen diese und führen aufwärts zu Fixpunkten 25.2. Oberhalb des vom Gegengewicht 15 in seiner obersten Lage beanspruchten Raums sind beidseits der Aufzugkabine 12 je ein Träger 44 auf den Gegengewichtsführungsschienen 19 und der Kabinenführungsschienen 18 montiert, welche Träger 44 die Umlenkpulleys 16.5 und 16.7, sowie die Fixpunkte 25.1 und 25.2 tragen. Die Träger 44 können mit dem Support 43 des Antriebs 14 eine u-förmige Tragstruktur bilden. Horizontal und vertikal wirkende Kräfte werden somit nicht auf die Schachtstruktur übertragen. Die Kabinenführungsschienen 18 und die an der Aufzugkabine 12 befestigten Umlenkpulleys 16.6 sind in Richtung der Kabinentiefe so nahe wie möglich beim Kabinenschwerpunkt S angeordnet, damit die Führungskräfte im Normalbetrieb wie auch beim Fangen gering bleiben.

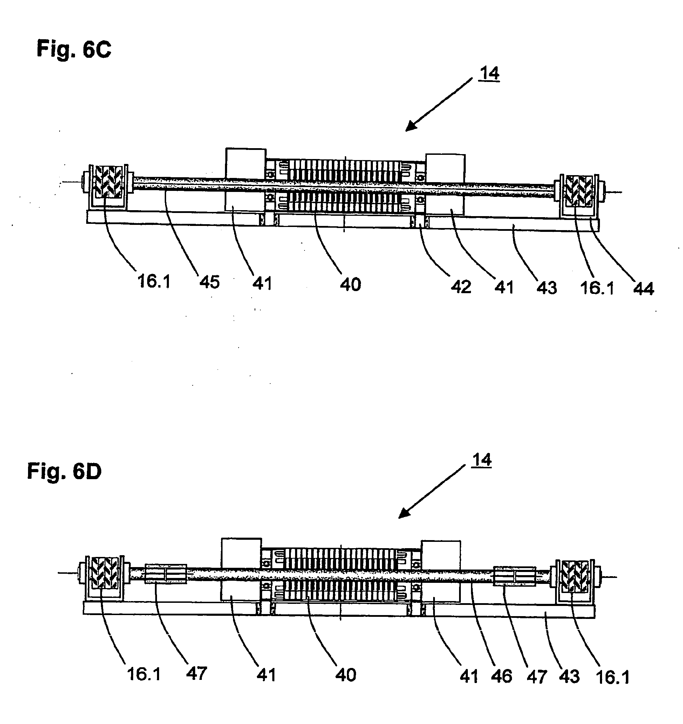

In **Fig. 6C** sind Details eines ersten Antriebs 14 gezeigt, der Bestandteil eines maschinenraumlosen Aufzugssystem gemäss den **Fig. 6A** und **6B** ist. Der Antrieb 14 umfasst einen Motor 40 und eine oder zwei Bremsen 41. Die beiden Antriebspulleys 16.1 werden durch Trägerelemente 44 mit dem Support 43 verbunden. Isolierte Drehmomentstützen 42 dienen der Befestigung des Motors 40 an dem Support 43. Die Welle 45 ist durchgehend ausgeführt. Der gezeigte Antrieb hat geringe rotierende Massen und ist auf Grund seiner geringen Baugrösse zum Einbau in die Schachtwand geeignet.

In **Fig. 6D** sind Details eines zweiten Antriebs 14 gezeigt, der Bestandteil eines maschinenraumlosen Aufzugssystem gemäss den **Fig. 6A** und **6B** ist. Der gezeigte Antrieb 14 hat eine geteilte Welle 46, die mit zwei Kupplungselementen 47 versehen ist. Ansonsten entspricht dieser Antrieb dem in **Fig. 6C** gezeigten Antrieb. Die Wartung des Antriebs 14 kann vom Schachtinneren aus erfolgen.

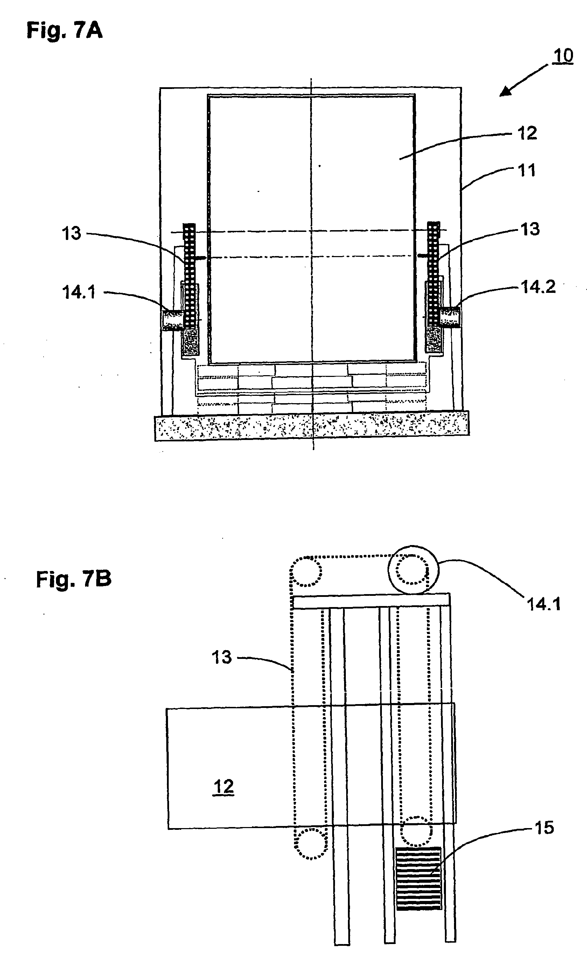

Eine Weiterbildung der Ausführungsform gemäss den **Fig. 6A** und **6B** ist in den **Fig. 7A** und **7B** gezeigt. Die Ausführungsform unterscheidet sich dadurch, dass zwei separate Antriebe 14.1 und 14.2 vorgesehen sind. Die Aufzugkabine 12 und die Gegengewichte 15 sind 2:1 aufgehängt. Die Seitenansicht in Figur 7B zeigt die stets gleichsinnige Biegung der Zahnriemenübertragungsmittel 13, was deren vorzeitiger Abnützung entgegenwirkt.

Bei den bisher beschriebenen Ausführungsformen ist die Funktion den Antreibens und die Funktion des Tragens jeweils kombiniert. Aus diesem Grunde wurde auch der Begriff Übertragungsmittel zur Umschreibung der Funktion des Zahnriemens verwendet.

In den folgenden Ausführungsformen wird die Funktion des Tragens und die Funktion des Antreibens getrennt ausgeführt. Mit anderen Worten, es gibt separate Tragmittel und Treibmittel.

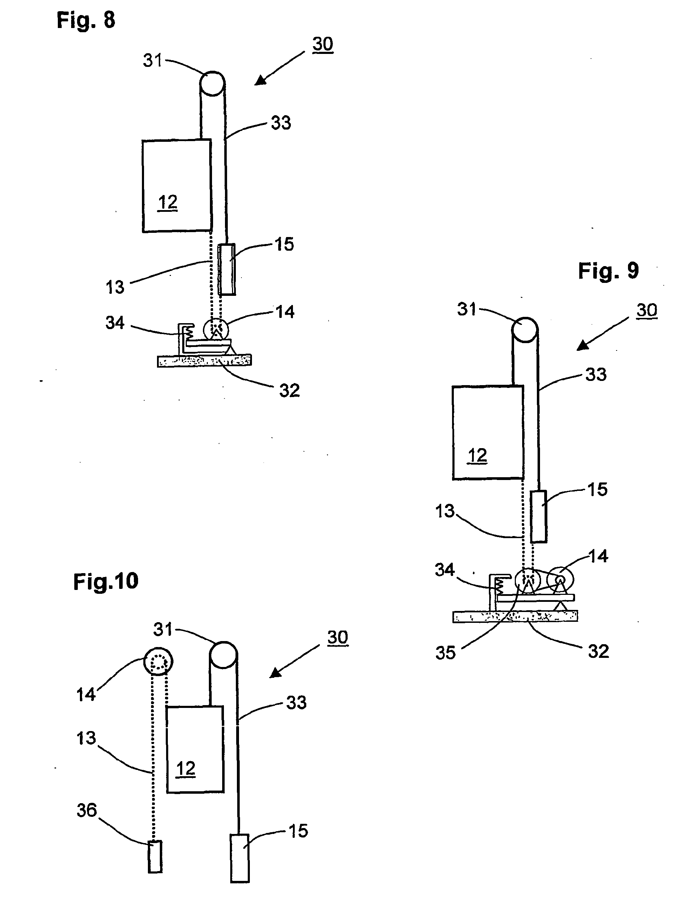

**Fig. 8** zeigt eine erste solche Ausführungsform. Die Aufzugkabine 12 und das Gegengewicht 15 sind mit Tragmitteln 33 in Form von Seilen (z.B. Stahlseile, Aramidseile), Flachriemen, Zahnriemen oder Ketten miteinander verbunden. Ein Umlenkpulley 31 ist am Schachtkopf vorgesehen und kann auf den Führungsschienen (nicht dargestellt) abgestützt sein. Der Antrieb 14 befindet sich am Schachtboden 32. Mittels Zahnriementreibmittel 13 bewegt der Antrieb 14 die Aufzugkabine 12. Das Zahnriementreibmittel 13 ist an einem Ende mit der unteren Seite des Gegengewichtes 15 verbunden. Die notwendige Spannkraft kann zum Beispiel mittels einer Druckfeder 34, oder durch ein entsprechendes Gegengewicht erzeugt werden.

Die in **Fig. 9** gezeigte Ausführungsform 30 entspricht im wesentlichen der in **Fig. 8** gezeigten Ausführungsform. Ein Unterschied besteht darin, dass der Antrieb 14 über eine Reduktion 35 verfügt. Damit kann ein kleinerer Antrieb 14 eingesetzt werden. Der Antrieb 14 kann über einen Keilriemen oder ähnliches mit der Reduktion 35 gekoppelt sein.

Eine weitere Ausführungsform ist der **Fig. 10** zu entnehmen. Auch diese Ausführungsform ist der in **Fig. 8** gezeigten Form ähnlich. Auch hier gibt es separate Tragmittel 33 und Treibmittel 13, wobei ein Zahnriemen als Treibmittel dient. Der Antrieb 14 ist im Bereich des Schachtkopfes vorgesehen und kann zum Beispiel auf den Führungsschienen der Aufzugkabine 12 abgestützt sein. Der Zahnriemen 13 verbindet die Aufzugkabine 12 mit einem zweiten Gewicht 36, das in Grösse und Gewicht so ausgeführt ist, dass bei Kraftübertragung vom Antriebspulley auf den Zahnriemen 13 dessen Verzahnung mit derjenigen des Antriebspulleys im Eingriff bleibt. Das Gewicht der leeren Aufzugkabine 12 wird durch das Gegengewicht 15 so weit ausgeglichen, dass die leere Aufzugkabine 12 in jedem Betriebszustand das Kabinentrum des Antriebszahnriemen 13 so stark belastet, dass das Antriebspulley das Gewicht 36 aufwärts bewegen kann.

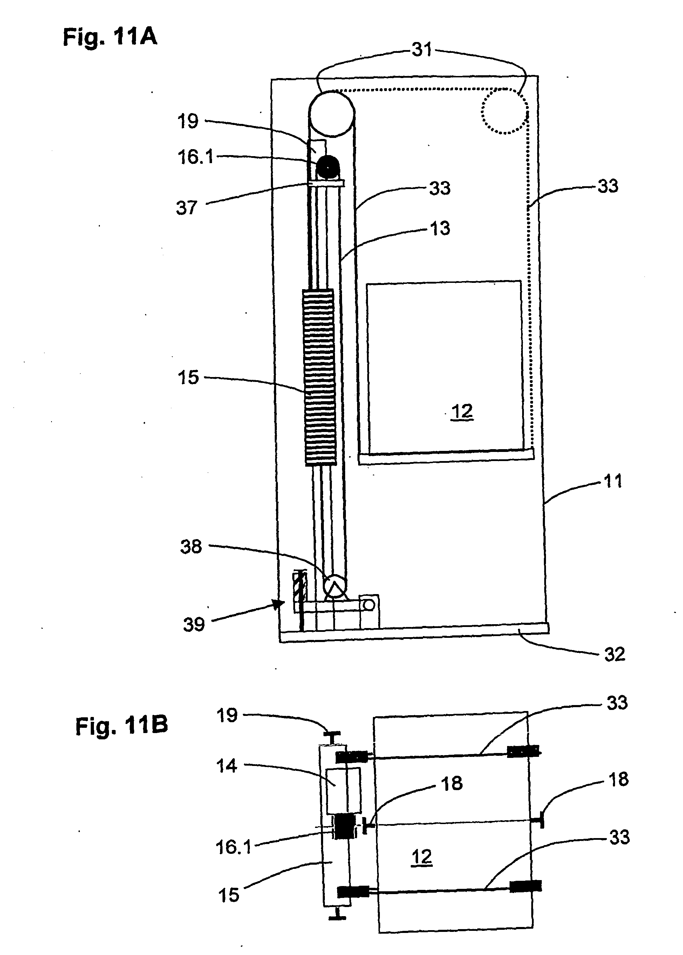

In den **Fig. 11A** und **11B** ist eine weitere Ausgestaltung der Erfindung gezeigt. Das Gegengewicht 15 ist 1:1 über ein Tragmittel 33 und mehrere Umlenkpulleys 31 mit der Aufzugkabine 12 verbunden. Die Tragmittel 33 können entweder nur links an der Aufzugkabine 12 (wie gezeigt) oder beidseitig der Aufzugkabine 12 (in gestrichelter Darstellung) befestigt sein. Diese Verbindungen erfüllen eine rein tragende Funktion. Der Antrieb 14 befindet sich oberhalb des Gegengewichtes 15 und wird von einem vorzugsweise an den Führungsschienen 18, 19 befestigten Support 37 getragen. Das Gegengewicht 15 gleicht 100% des Kabinengewichtes und einen Teil der Nutzlast aus. Ein Zahnriemen 13 ist oben am Gegengewicht 15 direkt befestigt (Umhängung 1:1), über das Antriebspulley 16.1 um 180° umgelenkt und zu der sich am Schachtboden 32 befindenden Spannrolle 38 geführt. Die Spannrolle 38 lenkt den Zahnriemen 13 erneut um 180° um, wonach dieser aufwärts zum unteren Ende des Gegengewichts 15 geführt und dort befestigt ist. Die Spannrolle 38 kann in einem Hebelwerk 39 eingebaut sein, das mittels Feder oder Gewichtskraft den Zahnriemen 13 spannt.

Man kann die Ausführungsform nach den **Fig. 11A** und **11B** abwandeln, indem man zum Beispiel den Zahnriemen 13 durch geeignete Anordnung von Pulleys so führt, dass er eine sogenannte 2:1 - Umhängung bildet, über welche der Antrieb 14 das Gegengewicht 15 antreibt (wie im Zusammenhang mit Fig. 1A beschrieben). Damit kann das erforderliche Maximaldrehmoment des Antriebes halbiert werden.

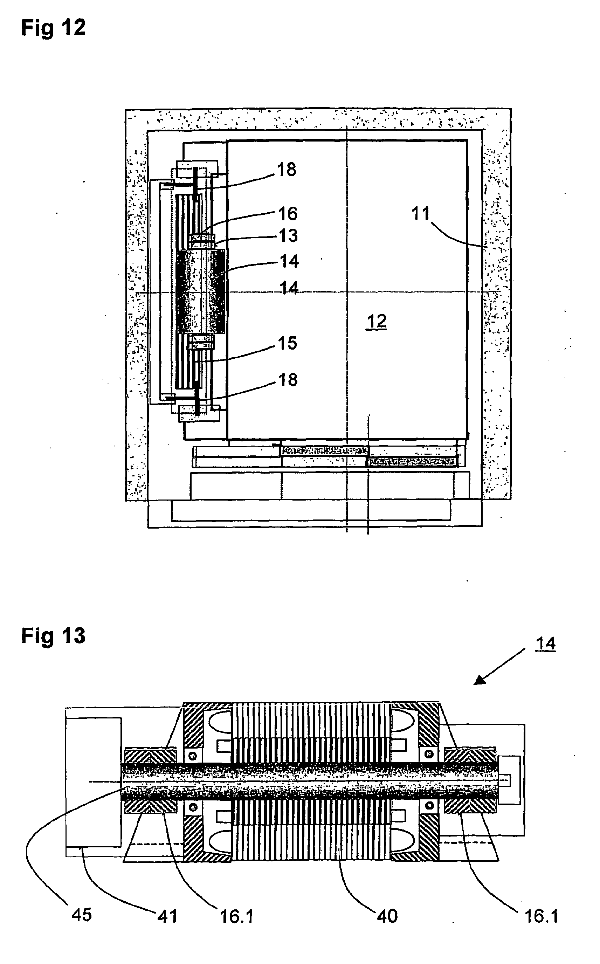

Eine weitere Ausführungsform ist in **Fig. 12** gezeigt. Der Antrieb 14 befindet sich bei dem gezeigten Beispiel zwischen der Aufzugkabine 12 und der Wand des Schachtes 11. Die Aufzugkabine 12 und das Gegengewicht 15 werden auf gemeinsamen Führungsschienen 18 geführt. Zu diesem Zweck weisen diese Schienen ein spezielles Profil auf. Es können entweder Antriebspulleys 16.1 auf beiden Seiten des Antriebs 14 oder nur auf einer Seite des Antriebs 14 vorgesehen werden. In Bild 12 ist eine 1:1 - Umhängung dargestellt. Eine Ausführung mit 2:1 - Umhängung ist möglich, wenn die Zahnriemen, wie beispielsweise in Fig. 1 dargestellt, unter der Aufzugkabine 12 hindurchgeführt und auf der anderen Kabinenseite im Schachtkopf fixiert werden.

Ein weiterer kompakter Antrieb 14 ist in **Fig. 13** gezeigt. Dieser Antrieb 14 zeichnet sich dadurch aus, dass er zwei Antriebspulleys 16.1 aufweist. Der Antrieb 14 umfasst weiterhin einen Motor 40, eine Bremse 41 und eine durchgehende Welle 45. Die beiden Antriebspulleys 16.1 sitzen je an einem Ende der Welle 45. Der Antrieb 14 ist besonders für den seitlich oberhalb der Aufzugkabine 12 liegenden Einbau ausgelegt.

Bei einer speziellen Ausführungsform des Zahnriemens ist dessen Rückseite mit einer Schicht (z.B. einer Textilschicht) versehen, die zur Verringerung der Reibung geeignet ist.

In einer weiteren Ausführungsform weist der Zahnriemen Zähne auf, die hochverschleissfest ausgeführt sind.

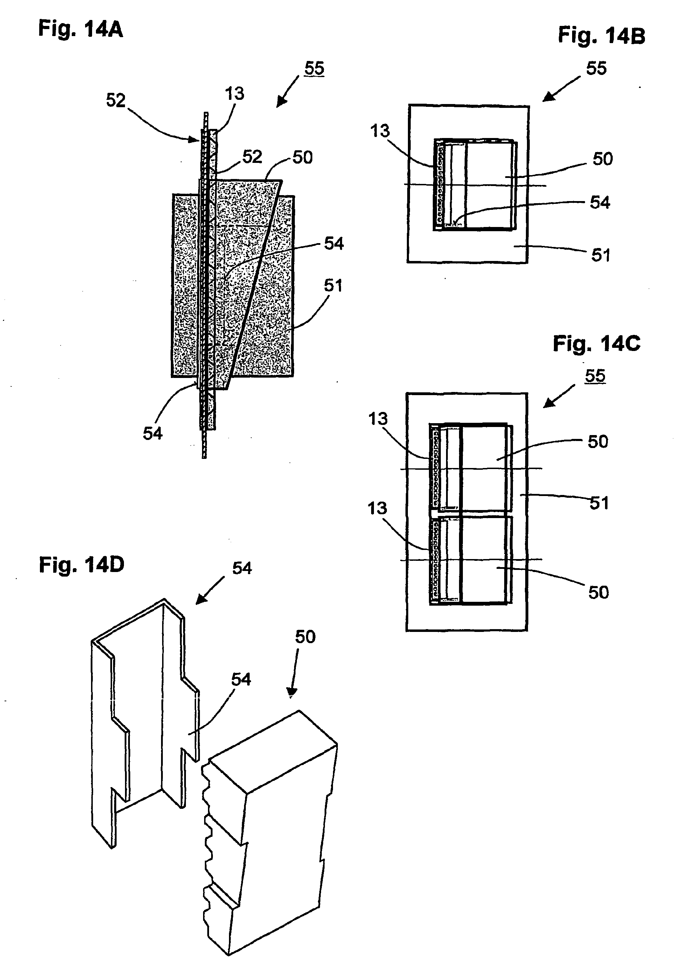

Herkömmliche Befestigungsmittel zum Befestigen von Zahnriemen benötigen viel Platz und sind durch die Verwendung von Schraubenverbindungen arbeitsintensiv bei der Montage bzw. Demontage. Verbesserte und einfacher zu handhabende Befestigungsmittel 55 sind in den **Fig. 14A, 14B, 14C** und **14D** gezeigt. Der gezeigte Zahnriemen 13 besteht aus einer flachen Riemenstruktur 52 (im gezeigten Fall dreilagig aufgebaut) und aus Zähnen 53, die eine Seite der flachen Riemenstruktur 52 bedecken. Die flache Seite kann mit einer Führungsrippe ausgeführt sein, wie bereits erwähnt. Zum Fixieren eines Zahnriemens 13, wird dieser formschlüssig mit einem verzahnten Keil 50 verbunden. Auf der Riemenrückseite 52 wird ein u-förmiges Gleitstück 54 (**Fig. 14D**) gesteckt, das mit zwei vorstehenden Laschen 56 in die seitlichen Aussparungen am Keil 50 eingreift, wodurch Gleitstück 54 und Keil 50 formschlüssig verbunden sind. Der Zahnriemen 13 wird dann samt Keil 50 in eine speziell geformte Ausnehmung in einem Gehäuse 51, eingeschoben. Wird der Zahnriemen 13 nun im gezeigten Bespiel (**Fig. 14A**) mit der Kraft F belastet, so zieht sich der Keil 50 samt Zahnriemen 13 tiefer in die Ausnehmung hinein und wird dadurch festgeklemmt. Das Gleitstück 54 verhindert das zwischen der Riemenrückseite 52 und dem Gehäuse 51 eine relative Bewegung in Folge der Kraft F auftritt. In **Fig. 14B** ist ein solches Befestigungsmittel 55 für einen Zahnriemen 13 in der Draufsicht gezeigt. Es können auch mehrere Zahnriemen 13 nebeneinander befestigt werden, wie in **Fig. 14C** gezeigt.

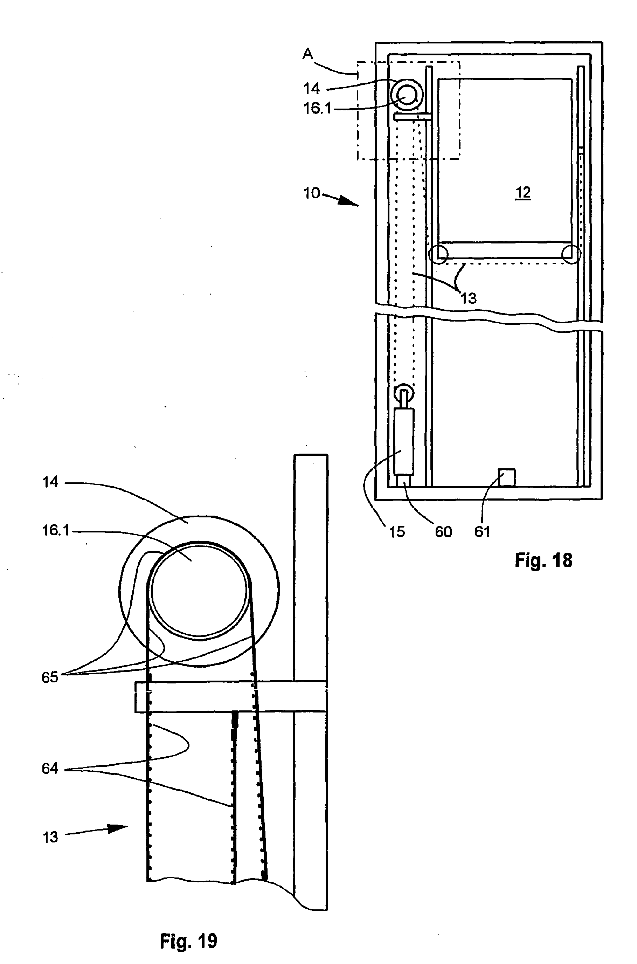

**Fig. 18** und **19** zeigen ein Aufzugssystem 10, bei dem ein Antrieb 14 über einen Zahnriemen 13 eine Aufzugkabine 12 und ein Gegengewicht 15 antreibt. Es ist eine Situation dargestellt, in der das Gegengewicht 15, beispielsweise infolge eines Steuerungsfehlers, auf seinen unteren Begrenzungspuffer 60 aufgefahren ist. Das Antriebspulley 16.1 des Antriebs 14 befindet sich wegen des Steuerungsfehlers oder infolge der Anhalteträgheit immer noch in Bewegung. Bei einem Aufzug mit reibschlüssigem Übertragungsmittel würde in dieser Situation durch die Entlastung des vom Antriebspulley 16.1 zum Gegengewicht 15 führenden Trums des Übertragungsmittels 13 das Antriebspulley gegenüber dem Übertragungsmittel 13 rutschen. Ist das Übertragungsmittel jedoch ein formschlüssiger Zahnriemen, so wird die Aufzugkabine 12 möglicherweise weiter angehoben, was zu Betriebsstörungen, zu Personeneinschliessung oder zu Beschädigungen am Zahnriemen führen könnte. Um solche Nachteile im seltenen Fall des genannten Steuerungsfehlers zu vermeiden, weist der Zahnriemen 13 in denjenigen zwei Zonen seiner Länge keine Verzahnung 64 auf, welche am Antriebspulley 16.1 anliegen, wenn das Gegengewicht 15 oder die Aufzugkabine 12 auf ihren jeweiligen unteren Endlagenpuffern 60 und 61 aufliegen. Die effektiv zahnfreien Zonen sind über die genannten, am Antriebspulley anliegenden Zonen hinaus jeweils in beiden Richtungen um 100 bis 300 mm verlängert.

**Fig. 19** zeigt den Ausschnitt A aus dem Aufzugssystem 10 gemäss Fig. 18 in vergrösserter Darstellung. Es sind darin die zahnfreien Zonen 65 des Zahnriemens 13 zu erkennen. Selbstverständlich lässt sich das beschriebene Prinzip auf alle Ausführungsformen von Aufzugssystemen anwenden, die einen Zahnriemen als Übertragungsmittel aufweisen.

Da es sich bei Zahnriemen um ein schlupffreies Übertragungsmittel handelt, wird der Einsatz von Encodern, beispielsweise für die Detektion der Kabinenposition oder der Kabinengeschwindigkeit, vereinfacht, weil keine Kompensation von Riemenschlupf erforderlich ist.

Gemäss Erfindung ist der stationäre Antrieb entweder in einem Maschinenraum untergebracht, oder der Antrieb befindet sich im bzw. am Aufzugschacht.

## Patentansprüche

1. Aufzugssystem **(10)** mit einer Aufzugkabine **(12),** einem Gegengewicht **(15),** einem Antrieb **(14)** und einem Zahnriemen **(13)** als Übertragungsmittel,
bei dem der Antrieb **(14)** stationär angeordnet ist und der Zahnriemen **(13)** mit dem Antrieb **(14)** zusammen wirkt, um die Aufzugkabine **(12)** und das Gegengewicht **(15)** durch Übertragung einer Kraft zu bewegen,
**dadurch gekennzeichnet, dass**
der Antrieb **(14)** zum Antreiben des Zahnriemens **(13)** ein mit einer entsprechenden Gegenverzahnung versehenes Antriebspulley **(16.1)** mit einen Durchmesser von 70 mm bis 100 mm aufweist.

2. Aufzugssystem **(10)** nach Anspruch 1, **dadurch gekennzeichnet, dass** der stationäre Antrieb **(14)** in oder an einem Aufzugschacht **(11),** oder in einem Maschinenraum montiert ist.

3. Aufzugsystem **(10)** nach Anspruch 1 oder 2, **dadurch gekennzeichnet, dass** der Zahnriemen **(13)** als Tragmittel und Treibmittel dient.

4. Aufzugsystem **(10)** nach Anspruch 1 oder 2, **dadurch gekennzeichnet, dass** separate Tragmittel **(33)** vorhanden sind, um die Aufzugkabine **(12)** mit einem Gegengewicht **(15)** zu verbinden.

5. Aufzugsystem **(10)** nach einem oder mehreren der vorhergehenden Ansprüche, **dadurch gekennzeichnet, dass** ein oder mehrere getrennte Zahnriemen **(13)** als Übertragungsmittel vorgesehen sind.

6. Aufzugssystem **(10)** nach einem oder mehreren der vorhergehenden Ansprüche, **dadurch gekennzeichnet, dass** der Zahnriemen **(13)** mindestens auf einer Seite mit v-förmig, pfeilförmig versetzt oder gebogen angeordneten Zähnen **(53)** versehen ist.

7. Aufzugsystem **(10)** nach einem oder mehreren der vorhergehenden Ansprüche, **dadurch gekennzeichnet, dass** das Aufzugsystem **(10)** zur maschinenraumlosen Ausführung ausgelegt ist.

8. Aufzugsystem **(10)** nach einem oder mehreren der vorhergehenden Ansprüche, **dadurch gekennzeichnet, dass** der Zahnriemen **(13)** auf der Rückseite eine Führungsrippe **(4)** aufweist.

9. Aufzugsystem **(10)** nach einem oder mehreren der vorhergehenden Ansprüche, **dadurch gekennzeichnet, dass** der Zahnriemen in wenigstens einer der zwei Zonen seiner Länge, welche am Antriebspulley **(16.1)** anliegen, wenn das Gegengewicht **(15)** oder die Aufzugkabine **(12)** auf ihren jeweiligen unteren Endlagenbegrenzungen **(60, 61)** aufliegen, keine Verzahnung (64) aufweist.

10. Aufzugsystem **(10)** nach Anspruch 1 mit einer Aufzugkabine **(12),** einem Gegengewicht **(15),** einem Antrieb **(14)** und mindestens einem riemenartigen Übertragungsmittel **(13),** das als Tragmittel **(13)** und/oder Treibmittel **(13)** für die Aufzugkabine **(12)** und das Gegengewicht **(15)** dient,
**dadurch gekennzeichnet,**
**dass** das riemenartige Übertragungsmittel **(13)** Zugträger **(5)** aus Zylon (PBO) enthält.

## Claims

1. Elevator system (10) with an elevator car (12), a counterweight (15), a drive (14), and a toothed belt (13) as transmission means, in which the drive (14) is arranged stationarily and the toothed belt (13) acts in conjunction with the drive (14) so as to move the elevator car (12) and the counterweight (15) by transmission of a force,
**characterized in that**
for the purpose of driving the toothed belt (13), the drive (14) has a drive pulley (16.1) that is provided with a corresponding opposite toothing and has a diameter of 70 mm to 100 mm.

2. Elevator system (10) according to Claim 1,
**characterized in that**
the stationary drive (14) is installed in or on an elevator hoistway (11) or in a machine room.

3. Elevator system (10) according to Claim 1 or 2,
**characterized in that**
the toothed belt (13) serves as supporting means and driving means.

4. Elevator system (10) according to Claim 1 or 2,
**characterized in that**
separate suspension means (33) are present to connect the elevator car (12) to a counterweight (15).

5. Elevator system (10) according to one or more of the foregoing claims, **characterized in that**
one or more separated toothed belts (13) are provided as transmission means.

6. Elevator system (10) according to one or several of the foregoing claims, **characterized in that**
the toothed belt (13) is provided on at least one side with V-shaped teeth (53) that are arranged offset in the form of an arrow or curved.

7. Elevator system (10) according to one of more of the foregoing claims, **characterized in that**
the elevator system (10) is designed for machine-room-less execution.

8. Elevator system (10) according to one or more of the foregoing claims, **characterized in that**
the toothed belt (13) has on its back a guide-rib (4).

9. Elevator system (10) according to one or more of the foregoing claims, **characterized in that**,
in at least one of the two zones of its length that rest against the drive pulley (16.1) when the counterweight (15) or the elevator car (12) rests against its respective lower end-position limits (60, 61), the toothed belt has no toothing (64).

10. Elevator system (10) according to Claim 1, with an elevator car (12), a counterweight (15), a drive (14) and at least one belt-type transmission means (13) that serves as supporting means (13) and/or driving means (13) for the elevator car (12) and the counterweight (15),
**characterized in that**
the belt-type supporting means (13) contains tension bearers (5) of Zylon (PBO).

## Revendications

1. Système d'ascenseur (10) avec une cabine d'ascenseur (12), un contrepoids (15), un entraînement (14) et une courroie dentée (13) comme moyen de transmission,
dans lequel l'entraînement (14) est stationnaire et la courroie dentée (13) coopère avec lui pour déplacer la cabine (12) et le contrepoids (15) grâce à la transmission d'une force,
**caractérisé en ce que** l'entraînement (14) destiné à entraîner la courroie dentée (13) comporte une poulie d'entraînement (16.1) qui est pourvue d'une denture opposée correspondante et qui présente un diamètre de 70 mm à 100 mm.

2. Système d'ascenseur (10) selon la revendication 1, **caractérisé en ce que** l'entraînement stationnaire (14) est monté dans ou sur une gaine d'ascenseur (11), ou dans une machinerie.

3. Système d'ascenseur (10) selon la revendication 1 ou 2, **caractérisé en ce que** la courroie dentée (13) sert de moyen porteur et de moyen d'entraînement.

4. Système d'ascenseur (10) selon la revendication 1 ou 2, **caractérisé en ce qu'**il est prévu des moyens porteurs distincts (33) pour relier la cabine (12) à un contrepoids (15).

5. Système d'ascenseur (10) selon l'une au moins des revendications précédentes, **caractérisé en ce qu'**il est prévu comme moyen de transmission une ou plusieurs courroies dentées (13).

6. Système d'ascenseur (10) selon l'une au moins des revendications précédentes, **caractérisé en ce que** la courroie dentée (13) est pourvue au moins sur un côté de dents (53) en V, à chevrons, ou courbes.

7. Système d'ascenseur (10) selon l'une au moins des revendications précédentes, **caractérisé en ce qu'**il est conçu pour un modèle sans machinerie.

8. Système d'ascenseur (10) selon l'une au moins des revendications précédentes, **caractérisé en ce que** la courroie dentée (13) présente sur sa face arrière une nervure de guidage (4).

9. Système d'ascenseur (10) selon l'une au moins des revendications précédentes, **caractérisé en ce que** la courroie dentée ne présente pas de denture (64) dans au moins une des deux zones de sa longueur qui sont appliquées contre la poulie d'entraînement (16.1) quand le contrepoids (15) ou la cabine (12) sont posées sur leurs limitations de fin de course inférieures (60, 61).

10. Système d'ascenseur (10) selon la revendication 1 avec une cabine d'ascenseur (12), un contrepoids (15), un entraînement (14) et au moins un moyen de transmission en forme de courroie dentée (13) qui sert de moyen porteur (13) et/ou de moyen d'entraînement (13) pour la cabine (12) et le contrepoids (15),
**caractérisé en ce que** le moyen de transmission en forme de courroie (13) contient un support de traction (5) en Zylon (PBO).
